# FASCICULE DE BREVET EUROPEEN

(11) **EP 3 759 363 B1**
(45) Date de publication et mention de la délivrance du brevet: **26.01.2022**
(21) Numéro de dépôt: 19705970.2
(22) Date de dépôt: 20.02.2019
(51) Int. Cl.: F16B 21/00, F16B 21/02, F16B 21/12

(54) **DISPOSITIF DE POSITIONNEMENT DE DEUX ELEMENTS DANS UNE POSITION DONNEE ET VEHICULE EQUIPE DUDIT DISPOSITIF DE POSITIONNEMENT**
VORRICHTUNG ZUM POSITIONIEREN VON ZWEI ELEMENTEN IN EINER BESTIMMTEN POSITION UND MIT DIESER POSITIONIERVORRICHTUNG AUSGESTATTETES FAHRZEUG
DEVICE FOR POSITIONING TWO ELEMENTS IN A GIVEN POSITION, AND VEHICLE EQUIPPED WITH SAID POSITIONING DEVICE

(30) Priorité: 02.03.2018 FR 1851832
(43) Date de publication de la demande: 06.01.2021
(73) Titulaire: Airbus Defence and Space GmbH, 82024 Taufkirchen (DE)
(72) Inventeur: DESCHEEMAEKER, Denis, 31700 BLAGNAC (FR); FEDERHEN, Jens, 81667 MUNICH (DE); RAPPSILBER, Michael, 82024 TAUFKIRCHEN (DE)
(74) Mandataire: Ipside
(86) Numéro de dépôt international: PCT/EP2019/054231
(87) Numéro de publication internationale: WO 2019/166302

(56) Documents cités:
- WO-A2-2010/085454
- WO-A2-2011/146349

## Description

La présente demande se rapporte à un dispositif de positionnement de deux éléments selon une position donnée ainsi qu'à un véhicule équipé dudit dispositif de positionnement.

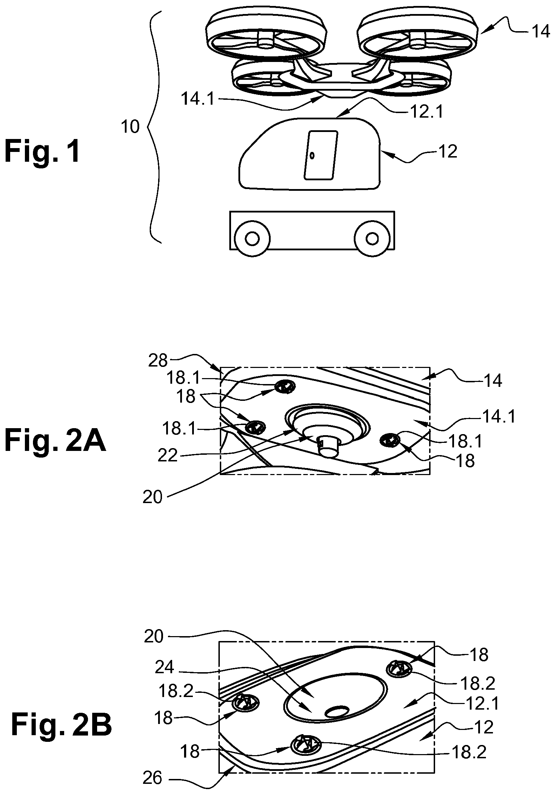

Selon un mode de réalisation illustré par la figure 1, un véhicule 10 comprend un habitacle 12 configuré pour être relié à un engin volant 14. Selon une configuration, l'habitacle 12 est configuré pour transporter au moins un passager et comprend une platine supérieure 12.1 (visible sur la figure 2B) configurée pour être connectée à une platine 14.1 de l'engin volant 14 (visible sur la figure 2A).

Ainsi, lorsque l'habitacle 12 est relié à l'engin volant 14, le véhicule 10 peut voler à la manière d'un aéronef.

A titre d'exemple, l'engin volant 14 est un drone de type quadri-rotor.

Selon un mode de réalisation visible sur les figure 2A et 2B, le véhicule 10 comprend une liaison détachable configurée pour relier l'habitacle 12 et l'engin volant 14 qui présente des systèmes d'attache 18 qui comprennent chacun une première partie 18.1 solidaire de la platine 14.1 de l'engin volant 14 et une deuxième partie 18.2 solidaire de la platine supérieure 12.1 de l'habitacle 12, les première et deuxième parties 18.1, 18.2 étant configurées pour occuper un premier état accouplé dans lequel l'habitacle 12 est solidement fixé à l'engin volant 14 et un deuxième état désaccouplé dans lequel l'habitacle 12 est désolidarisé de l'engin volant 14.

En fonctionnement, lorsque l'habitacle 12 doit être relié à l'engin volant 14, l'engin volant 14 doit se positionner par rapport à l'habitacle 12 selon une position donnée, dite accostée, dans laquelle les premières et deuxièmes parties 18.1, 18.2 des systèmes d'attache 18 coopèrent toutes simultanément. Cette opération d'accostage est délicate à réaliser. Dans le cas d'un pilotage autonome et automatique de l'engin volant 14, cette opération d'accostage nécessite de nombreux capteurs et/ou actionneurs pour corriger progressivement la position de l'engin volant 14 par rapport à l'habitacle 12 et la faire converger vers la position accostée.

Le document WO 2010/085454 A2 montre un système de fixation.

La présente invention vise à remédier aux inconvénients de l'art antérieur.

A cet effet, l'invention a pour objet un dispositif de positionnement de deux éléments selon une position accostée, comprenant des première et deuxième parties, la première partie comportant :
- une première surface de contact,
- une première portion cylindrique de révolution, en saillie par rapport à la première surface de contact, qui présente un axe de révolution perpendiculaire à la première surface de contact,
la deuxième partie comportant :
- une deuxième surface de contact,
- une deuxième portion cylindrique de révolution, en creux par rapport à la deuxième surface de contact, qui présente un axe de révolution perpendiculaire à la deuxième surface de contact,
les première et deuxième portions cylindriques de révolution ayant le même diamètre et les première et deuxième surfaces de contact étant configurées pour être plaquées l'une contre l'autre en position accostée.

Selon l'invention, les première et deuxième parties comprennent respectivement des première et deuxième portions tronconiques de section ovale qui ont des formes complémentaires de sorte à immobiliser les première et deuxième parties en rotation, selon les axes de révolution des première et deuxième portions cylindriques de révolution, en position accostée, les première et deuxième portions tronconiques de section ovale étant positionnées par rapport aux première et deuxième portions cylindriques de révolution de sorte que la première portion cylindrique de révolution pénètre dans la deuxième portion cylindrique de révolution avant que les première et deuxième portions tronconiques de section ovale ne soient en contact l'une avec l'autre.

Cette solution permet de manière simple, en rapprochant les première et deuxième parties l'une vers l'autre, d'obtenir automatiquement le positionnement des première et deuxième parties selon une position accostée donnée.

Selon une autre caractéristique, la deuxième partie comprend une deuxième portion tronconique, en creux par rapport à la deuxième surface de contact, intercalée entre la deuxième portion cylindrique de révolution et la deuxième surface de contact, la deuxième portion tronconique présentant une section qui s'évase en direction de la deuxième surface de contact.

Selon une autre caractéristique, la première portion cylindrique de révolution de la première partie comprend une extrémité libre arrondie.

Selon une autre caractéristique, la première partie comprend une première portion cylindrique de révolution sous forme d'une tige télescopique et un premier mécanisme configuré pour modifier la hauteur de la tige, la deuxième partie comportant une portion cylindrique de révolution femelle configurée pour recevoir la tige.

Selon une autre caractéristique, le dispositif de positionnement comprend un système de verrouillage configuré pour occuper un état verrouillé dans lequel il immobilise en translation la tige par rapport à la portion cylindrique de révolution femelle et un état déverrouillé dans lequel il permet à la tige de se translater par rapport à la portion cylindrique de révolution femelle.

Selon une configuration, le système de verrouillage comprend :
- au moins un tenon, supporté par la tige, mobile entre une position sortie dans laquelle il s'étend en saillie par rapport à la tige selon une direction radiale et une position rentrée dans laquelle le tenon est positionné dans la tige,
- au moins une empreinte, prévue au niveau de la portion cylindrique de révolution femelle, configurée pour recevoir le tenon dans la position sortie.

La première partie comprend un deuxième mécanisme configuré pour modifier la position du (ou des) tenon(s) et le (ou les) déplacer de la position sortie vers la position rentrée et/ou un ressort configuré pour pousser le (ou les) tenon(s) vers la position sortie et le (ou les) maintenir dans cette position.

Selon une autre caractéristique, la première partie et/ou la deuxième partie sont reliées au premier élément et/ou au deuxième élément par une liaison souple.

Selon un mode de réalisation, la première portion tronconique de section ovale de la première partie est positionnée entre la première portion cylindrique de révolution et la première surface de contact, la première portion tronconique de section ovale présentant une section qui s'évase en direction de la première surface de contact ; et la deuxième portion tronconique de section ovale de la deuxième partie est positionnée entre la deuxième portion cylindrique de révolution et la deuxième surface de contact, la deuxième portion tronconique de section ovale présentant une section qui s'évase en direction de la deuxième surface de contact.

Selon un autre mode de réalisation, la première partie comprend :
- une première portion tronconique de révolution, intercalée entre la première portion cylindrique de révolution et la première surface de contact,
- la première portion tronconique de révolution et la première portion tronconique de section ovale formant une rigole périphérique qui présente un fond plat correspondant à la première surface de contact ;
et la deuxième partie comprend :
- une deuxième portion tronconique de révolution, intercalée entre la deuxième portion cylindrique de révolution et la deuxième surface de contact,
- la deuxième portion tronconique de révolution et la deuxième portion tronconique de section ovale formant une nervure périphérique qui présente un sommet plat correspondant à la deuxième surface de contact.

La première partie peut comprendre une première portion cylindrique de section ovale disposée dans le prolongement de la première portion tronconique de section ovale. En complément, la deuxième partie peut comprendre une deuxième portion cylindrique de section ovale disposée dans le prolongement de la deuxième portion tronconique de section ovale.

Selon un autre mode de réalisation, la première portion tronconique de section ovale est en creux par rapport à une extrémité libre de la première portion cylindrique de révolution et la deuxième portion tronconique de section ovale est en saillie par rapport à un fond de la deuxième portion cylindrique.

L'invention a également pour objet un véhicule comprenant un habitacle, un engin volant et un dispositif de positionnement selon l'une des caractéristiques précédentes pour positionner, selon une position accostée, l'habitacle et l'engin volant.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un véhicule selon un mode de réalisation,
- La figure 2A est une vue en perspective d'une platine solidaire d'un engin volant qui illustre un mode de réalisation de l'invention,
- La figure 2B est une vue en perspective d'une platine supérieure solidaire d'un habitacle qui illustre un mode de réalisation de l'invention,
- Les figures 3A, 3B, 3C sont des vues de face, de dessus et de côté d'une première partie d'un dispositif de positionnement qui illustrent un premier mode de réalisation,
- Les figures 4A, 4B, 4C sont des vues de face, de dessus et de côté d'une deuxième partie d'un dispositif de positionnement qui illustrent un premier mode de réalisation,
- La figure 5 est une coupe des première et deuxième parties d'un dispositif de positionnement en position accostée qui illustre le premier mode de réalisation,
- Les figures 6 à 9 sont des coupes des première et deuxième parties d'un dispositif de positionnement dans différentes positions lors de la phase d'accostage qui illustrent le premier mode de réalisation,
- La figure 10 est une vue de dessus des première et deuxième parties d'un dispositif de positionnement lors de la phase d'accostage qui illustre le premier mode de réalisation,
- Les figures 11A, 11B, 11C sont des vues de face, de dessus et de côté d'une première partie d'un dispositif de positionnement qui illustrent un deuxième mode de réalisation,
- Les figures 12A, 12B, 12C sont des vues de face, de dessus et de côté d'une deuxième partie d'un dispositif de positionnement qui illustrent un deuxième mode de réalisation,
- La figure 13 est une coupe des première et deuxième parties d'un dispositif de positionnement en position accostée qui illustre le deuxième mode de réalisation,
- Les figures 14A, 14B, 14C sont des vues de face, de dessus et de côté d'une première partie d'un dispositif de positionnement qui illustrent un troisième mode de réalisation,
- Les figures 15A, 15B, 15C sont des vues de face, de dessus et de côté d'une deuxième partie d'un dispositif de positionnement qui illustrent un troisième mode de réalisation,
- La figure 16 est une coupe des première et deuxième parties d'un dispositif de positionnement en position accostée qui illustre le troisième mode de réalisation,
- Les figures 17A, 17B, 17C sont des vues de face, de dessus et de côté d'une première partie d'un dispositif de positionnement qui illustrent un quatrième mode de réalisation,
- Les figures 18A, 18B, 24C sont des vues de face, de dessus et de côté d'une deuxième partie d'un dispositif de positionnement qui illustrent un quatrième mode de réalisation, et
- La figure 19 est une coupe des première et deuxième parties d'un dispositif de positionnement en position accostée qui illustre le quatrième mode de réalisation
- La figure 20A est une coupe d'une première partie d'un dispositif de positionnement qui illustre un cinquième mode de réalisation de l'invention,
- La figure 20B est une coupe d'une deuxième partie d'un dispositif de positionnement apte à coopérer avec la première partie visible sur la figure 20A,
- Les figures 21 et 22 sont des représentations schématiques du dispositif de positionnement visible sur les figures 20A et 20B respectivement lors d'une phase d'accostage et en position accostée,
- La figure 23 est une coupe d'une première partie d'un dispositif de positionnement télescopique et équipé d'un système de verrouillage qui illustre un sixième mode de réalisation de l'invention,
- Les figures 24A et 24B sont des coupes du système de verrouillage visible sur la figure 23 respectivement à l'état verrouillé et à l'état déverrouillé,
- La figure 25 est une représentation schématique d'une première partie d'un dispositif de positionnement télescopique et équipé d'un système de verrouillage qui illustre le sixième mode de réalisation.

Sur les figures 2A et 2B, on a représenté un dispositif de positionnement 20 qui comprend une première partie 22 solidaire d'un engin volant 14 et une deuxième partie 24 solidaire d'un habitacle 12.

Bien que décrit appliqué à la liaison entre l'engin volant 14 et l'habitacle 12, le dispositif de positionnement 20 n'est pas limité à cette application. Il peut par exemple être utilisé pour positionner un habitacle 12 par rapport à une base roulante, selon une position accostée, pour permettre aux systèmes d'attache de s'accoupler ou plus largement pour positionner un premier élément 26 et un deuxième élément 28, l'un par rapport à l'autre, selon une position accostée.

Indifféremment, la première partie 22 du dispositif de positionnement 20 est solidaire du premier élément 26 et la deuxième partie 24 du dispositif de positionnement 20 est solidaire du deuxième élément 28 ou, inversement, la première partie 22 du dispositif de positionnement 20 est solidaire du deuxième élément 28 et la deuxième partie 24 du dispositif de positionnement 20 est solidaire du premier élément 26.

Dans un repère orthonormé, dans la position accostée, la position et l'orientation de la première partie par rapport à la deuxième partie sont connues selon les trois axes du repère orthonormé.

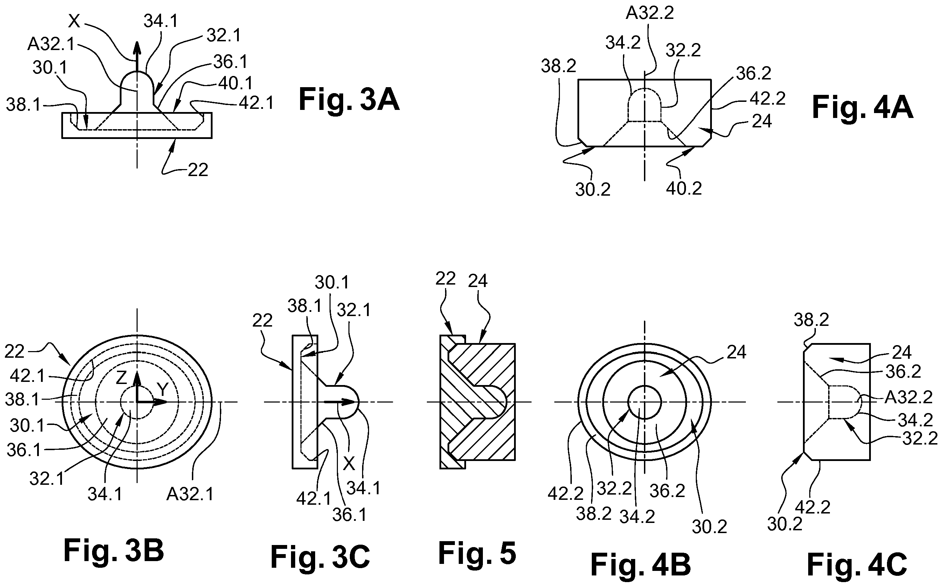

Selon un premier mode de réalisation visible sur les figures 3A à 3C, 4A à 4C et 5, la première partie 22 comprend une première surface de contact 30.1 et la deuxième partie 28 comprend une deuxième surface de contact 30.2, les première et deuxième surfaces de contact 30.1 et 30.2 étant configurées pour être plaquées l'une contre l'autre lorsque les première et deuxième parties 22 et 24 sont en position accostée.

La première partie 22 comprend une première portion cylindrique de révolution 32.1, en saillie par rapport à la première surface de contact 30.1, qui présente un axe de révolution A32.1 perpendiculaire à la première surface de contact 30.1.

Selon une configuration, la première portion cylindrique de révolution 32.1 comprend une extrémité libre 34.1, la plus écartée de la première surface de contact 30.1, arrondie, par exemple en forme de demi-sphère.

La deuxième partie 24 comprend une deuxième portion cylindrique de révolution 32.2, en creux par rapport à la deuxième surface de contact 30.2, qui présente un axe de révolution A32.2 perpendiculaire à la deuxième surface de contact 30.2. Les première et deuxième portions cylindriques de révolution 32.1 et 32.2 ont le même diamètre.

Selon une configuration, la deuxième portion cylindrique de révolution 32.2 comprend un fond 34.2 en forme de demi-sphère. L'extrémité libre 34.1 et le fond 34.2 présentent des formes en demi-sphère complémentaires, avec le même rayon.

La première portion cylindrique de révolution 32.1 est dite mâle et la deuxième portion cylindrique de révolution de révolution 32.2 est dite femelle car la première portion cylindrique de révolution 32.1 est disposée dans la deuxième portion cylindrique de révolution 32.2 dans la position accostée.

Les première et deuxième portions cylindriques de révolution 32.1 et 32.2 ont chacune une hauteur (dimension prise selon une direction perpendiculaire aux première et deuxième surfaces de contact 30.1, 30.2) telle que l'extrémité libre 34.1 de la première portion cylindrique de révolution 32.1 mâle est en contact, ou quasi-contact, avec le fond 34.2 de la deuxième portion cylindrique de révolution 32.2 femelle, comme illustré sur la figure 5. Pour la suite de la description, un axe d'introduction X est confondu avec l'axe A32.2 de la deuxième portion cylindrique de révolution 32.2 de la deuxième partie 24 du dispositif de positionnement 20, un axe Y est perpendiculaire à l'axe d'introduction X et un axe Z est perpendiculaire aux axes X et Y.

De plus, on considère que deux surfaces sont en quasi-contact lorsqu'il subsiste un infime espacement entre les deux surfaces en position accostée.

Selon le premier mode de réalisation, la première partie 22 comprend une première portion tronconique de révolution 36.1, en saillie par rapport à la première surface de contact 30.1, intercalée entre la première portion cylindrique de révolution 32.1 et la première surface de contact 30.1, la première portion tronconique de révolution 36.1 présentant une section qui s'évase en direction de la première surface de contact 30.1. La première portion tronconique de révolution 36.1 présente une plus petite section, identique au diamètre de la première portion cylindrique de révolution 32.1.

En complément, la deuxième partie 24 comprend une deuxième portion tronconique de révolution 36.2, en creux par rapport à la deuxième surface de contact 30.2, intercalée entre la deuxième portion cylindrique de révolution 32.2 et la deuxième surface de contact 30.2, la deuxième portion tronconique de révolution 36.2 présentant une section qui s'évase en direction de la deuxième surface de contact 30.2. La deuxième portion tronconique de révolution 36.2 a une petite section, égale au diamètre de la deuxième portion cylindrique de révolution 32.2.

Les première et deuxième portions tronconiques de révolution 36.1 et 36.2 ont des formes complémentaires. Ainsi, lorsque les première et deuxième parties 22, 24 sont en position accostée, les première et deuxième parties tronconiques de révolution 36.1 et 36.2 sont en contact ou quasi-contact.

La première portion tronconique de révolution 36.1 est dite mâle et la deuxième portion tronconique de révolution 36.2 est dite femelle car la première portion tronconique de révolution 36.1 est disposée dans la deuxième portion tronconique de révolution 36.2 en position accostée.

En complément, la première partie 22 comprend une première portion tronconique de section ovale 38.1, qui s'étend à partir de la première surface de contact 30.1 vers l'extrémité libre 34.1 de la première position cylindrique de révolution 32.1 et qui présente une section s'évasant en direction de l'extrémité libre 34.1 de la première portion cylindrique de révolution 32.1. La première portion tronconique de section ovale 38.1 est espacée de la première portion tronconique 36.1 et présente une plus petite section qui est plus grande que la plus grande section de la première portion tronconique de révolution 36.1.

Pour la présente demande, on entend par ovale une section qui n'est pas circulaire, telle qu'à titre d'exemple une section triangulaire, rectangulaire ou quelconque, permettant d'empêcher la rotation selon l'axe X de la première partie 22 et de la deuxième partie 24 lorsque ces dernières sont en position accostée c'est-à-dire lorsque la première surface de contact 30.1 de la première partie 22 est en contact ou quasi-contact avec la deuxième surface de contact 30.2 de la deuxième partie 24.

La première portion tronconique de révolution 36.1 et la première portion tronconique de section ovale 38.1 forment une rigole périphérique 40.1 qui présente un fond plat (correspondant à la première surface de contact 30.1) et qui a une largeur (dimension prise perpendiculairement à l'axe d'introduction X) variable sur sa périphérie.

En complément, la deuxième partie 24 comprend une deuxième portion tronconique de section ovale 38.2, qui s'étend à partir de la deuxième surface de contact 30.2 vers le fond 34.2 de la deuxième portion cylindrique de révolution 32.2 et qui présente une section s'évasant en direction du fond 34.2 de la deuxième portion cylindrique de révolution 32.2. La deuxième portion tronconique de section ovale 38.2 présente une plus petite section qui est plus grande que la plus grande section de la deuxième portion tronconique de révolution 36.2.

La deuxième portion tronconique de révolution 36.2 et la deuxième portion tronconique de section ovale 38.2 forment une nervure périphérique 40.2 qui présente un sommet plat (correspondant à la deuxième surface de contact 30.2) et qui a une largeur (dimension prise perpendiculairement à l'axe d'introduction X) variable sur sa périphérie.

Les première et deuxième portions tronconiques de section ovale 38.1, 38.2 ont des formes complémentaires. Il en est de même pour la rigole périphérique 40.1 et la nervure périphérique 40.2. Ainsi, lorsque les première et deuxième parties 22, 24 sont en position accostée, les première et deuxième portions tronconiques de section ovale 38.1 et 38.2 sont en contact ou quasi-contact. Il en est de même pour la rigole périphérique 40.1 et la nervure périphérique 40.2.

La deuxième portion tronconique de section ovale 38.2 est dite mâle et la première portion tronconique de section ovale 38.1 est dite femelle car la deuxième portion tronconique de section ovale 38.2 est disposée dans la première portion tronconique de section ovale 38.1 en position accostée.

Selon le premier mode de réalisation, la première partie 22 comprend une première portion cylindrique de section ovale 42.1 disposée dans le prolongement de la première portion tronconique de section ovale 38.1. La première portion cylindrique de section ovale 42.1 a une section constante selon une direction parallèle à l'axe d'introduction X et égale à la plus grande section de la première portion tronconique de section ovale 38.1.

Cette première portion cylindrique de section ovale 42.1 contribue à augmenter la profondeur de la rigole périphérique 40.1.

En complément, la deuxième partie 24 comprend une deuxième portion cylindrique de section ovale 42.2, disposée dans le prolongement de la deuxième portion tronconique de section ovale 38.2. La deuxième portion cylindrique de section ovale 42.2 a une section constante selon une direction parallèle à l'axe d'introduction X et égale à la plus grande section de la deuxième section tronconique de section ovale 38.2.

Cette deuxième portion cylindrique de section ovale 42.2 contribue à augmenter la hauteur de la nervure périphérique 40.2.

Les première et deuxième portions cylindriques de section ovale ont des sections identiques, la deuxième portion cylindrique de section ovale 42.2 coulissant à l'intérieur de la première portion cylindrique de section ovale 42.1 lors de la phase d'accostage des première et deuxième parties 22 et 24.

La deuxième portion cylindrique de section ovale 42.2 est dite mâle et la première portion cylindrique de section ovale 42.1 est dite femelle car la deuxième portion cylindrique de section ovale 42.2 est disposée dans la première portion cylindrique de section ovale 42.1 en position accostée.

Selon une première variante, les sections ovales des première et deuxième portions tronconiques de section ovale 38.1, 38.2 ont deux axes de symétrie correspondant aux axes Y et Z. Dans ce cas, en position accostée, les première et deuxième parties 22 et 24 peuvent occuper seulement deux positions différentes et diamétralement opposées.

Selon une deuxième variante, les sections ovales des première et deuxième portions tronconiques de section ovale 38.1, 38.2 sont dissymétriques par rapport aux axes Y et Z. Dans ce cas, en position accostée, les première et deuxième parties 22 et 24 peuvent occuper une seule position.

Selon une configuration, les premières portions tronconique et cylindrique de section ovale 38.1, 42.1 ont une hauteur (dimension prise selon une direction parallèle à l'axe d'introduction X) inférieure à la hauteur de la première portion tronconique de révolution 36.1. Ainsi, la première portion cylindrique de révolution 32.1 pénètre dans la deuxième portion cylindrique de révolution 32.2 avant que la première portion tronconique de section ovale 38.1 et/ou la première portion cylindrique de section ovale 42.1 ne soi(en)t en contact avec la deuxième portion tronconique de section ovale 38.2 et/ou la deuxième portion cylindrique de section ovale 42.2.

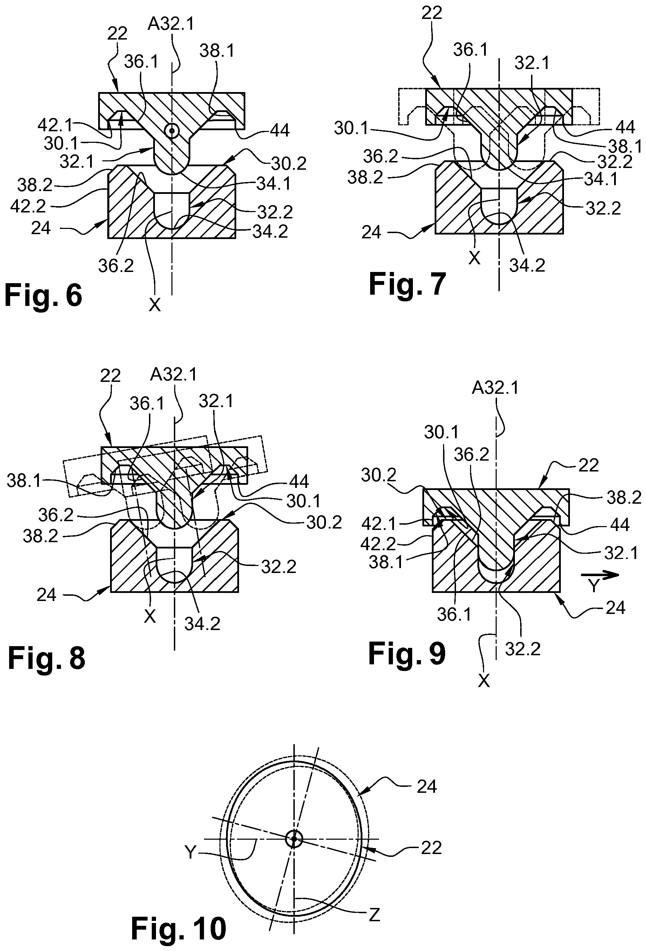

Lors de la phase d'accostage visible sur les figures 6 à 9, l'extrémité libre 34.1 de la première portion cylindrique de révolution 32.1 de la première partie 22 pénètre dans la deuxième portion tronconique de révolution 36.2 de la deuxième partie 24 comme illustré sur la figure 6. Dès lors, comme illustré sur la figure 7, le débattement de la première partie 22 par rapport à la deuxième partie 24 est limité selon des directions perpendiculaires à l'axe d'introduction X. Comme illustré sur la figure 8, l'axe A32.1 de la première portion cylindrique de révolution 32.1 de la première partie 22 peut être incliné par rapport à l'axe d'introduction X.

La forme demi-sphérique de l'extrémité libre 34.1 de la première portion cylindrique de révolution 32.1 de la première partie 22 favorise son introduction dans la deuxième portion tronconique de révolution 36.2 de la deuxième partie 24 de manière à guider la première partie 22 dans la deuxième partie 24.

Le déplacement de la première partie 22 selon l'axe d'introduction X, en direction de la deuxième partie 24, va progressivement réduire le débattement de la première partie 22 par rapport à la deuxième partie 24 selon des directions perpendiculaires à l'axe d'introduction X jusqu'à ce que la première portion cylindrique de révolution 32.1 de la première partie 22 pénètre dans la deuxième portion cylindrique de révolution 32.2 de la deuxième partie 24. Dès lors, la première partie 22 peut seulement se translater selon l'axe d'introduction X et pivoter autour de l'axe de révolution A32.2 de la deuxième portion cylindrique de révolution 32.2, comme illustré sur la figure 9.

La première partie 22 va continuer à se déplacer selon l'axe d'introduction X, en direction de la deuxième partie 24, jusqu'à ce que l'extrémité 44 de la première portion cylindrique de section ovale 42.1 de la première partie 22 vienne en contact avec la deuxième portion tronconique de section ovale 38.2 de la deuxième partie 24, comme illustré sur la figure 9. Dès lors, le rapprochement de la première partie 22 et de la deuxième partie 24, en se translatant selon l'axe d'introduction X, va provoquer la rotation de la première partie 22 par rapport à la deuxième partie 24, comme illustré sur la figure 10, jusqu'à ce que la section ovale de la première portion cylindrique de section ovale 42.1 de la première partie 22 coïncide avec la section ovale de la deuxième portion cylindrique de section ovale 42.2 de la deuxième partie 24.

A partir de ce moment, la première portion cylindrique de section ovale 42.1 de la première partie 22 coulisse dans la deuxième portion cylindrique de section ovale 42.2 de la deuxième partie 24 jusqu'à ce que la première surface de contact 30.1 de la première partie 22 soit en contact avec la deuxième surface de contact 30.2 de la deuxième partie 24, comme illustré sur la figure 5, ce qui correspond à la position accostée.

Lorsque les première et deuxième parties 22 et 24 sont en position accostée, les premier et deuxième éléments 26 et 28 sont immobiles selon deux translations parallèles aux axes Y et Z et selon trois rotations autour des axes X, Y, Z. La première surface de contact 30.1 de la première partie 22 étant en contact ou quasi-contact avec la deuxième surface de contact 30.2 de la deuxième partie 24, les premier et deuxième éléments 26 et 28 sont immobilisés, selon une translation parallèle à l'axe X, dans un premier sens. Les systèmes d'attache 18 maintiennent les premier et deuxième éléments 26 et 28 immobilisés selon la translation parallèle à l'axe X dans un second sens, opposé au premier.

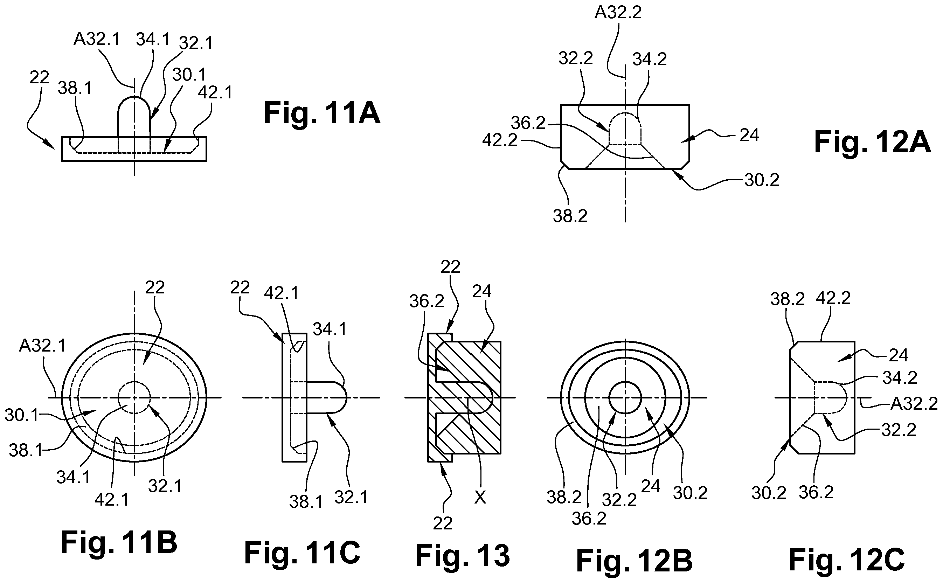

Les figures 11A à 11C, 12A à 12C et 13 illustrent un deuxième mode de réalisation. Les éléments du deuxième mode de réalisation, identiques à ceux du premier mode de réalisation, portent les mêmes références. Par rapport au premier mode de réalisation, la première partie 22 ne comprend pas de première portion tronconique de révolution 36.1. Selon ce deuxième mode de réalisation, la première portion cylindrique de révolution 32.1 s'étend jusqu'à la première surface de contact 30.1.

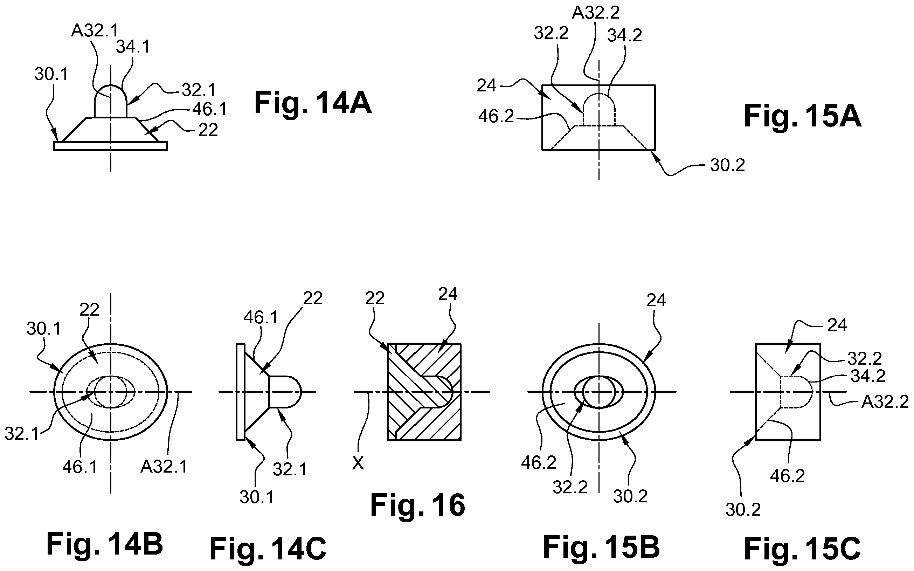

Les figures 14A à 14C, 15A à 15C et 16 illustrent un troisième mode de réalisation. Les éléments du troisième mode de réalisation, identiques à ceux du premier mode de réalisation, portent les mêmes références. Selon ce troisième mode de réalisation, la première partie ne comprend pas de première portion tronconique de section ovale 38.1 femelle ni de première portion cylindrique de section ovale 42.1 femelle. La deuxième partie 24 ne comprend pas de deuxième portion tronconique de section ovale 38.2 mâle ni de deuxième portion cylindrique de section ovale 42.2 mâle. Selon ce troisième mode de réalisation, la première partie 22 comprend, en remplacement de la première portion tronconique de révolution 36.1, une première portion tronconique de section ovale 46.1 mâle, en saillie par rapport à la première surface de contact 30.1, intercalée entre la première portion cylindrique de révolution 32.1 et la première surface de contact 30.1, la première portion tronconique de section ovale 46.1 présentant une section qui s'évase en direction de la première surface de contact 30.1.

En complément, la deuxième partie 24 comprend, en remplacement de la deuxième portion tronconique de révolution 36.2 mâle, une deuxième portion tronconique de section ovale 46.2 femelle, en creux par rapport à la deuxième surface de contact 30.2, intercalée entre la deuxième portion cylindrique de révolution 32.2 et la deuxième surface de contact 30.2, la deuxième portion tronconique de section ovale 46.2 présentant une section qui s'évase en direction de la deuxième surface de contact 30.2.

Les première et deuxième portions tronconiques de section ovale 46.1, 46.2 ont des formes complémentaires. Ainsi, en position accostée, les première et deuxième parties 22 et 24 sont immobilisées en rotation autour de l'axe d'introduction X.

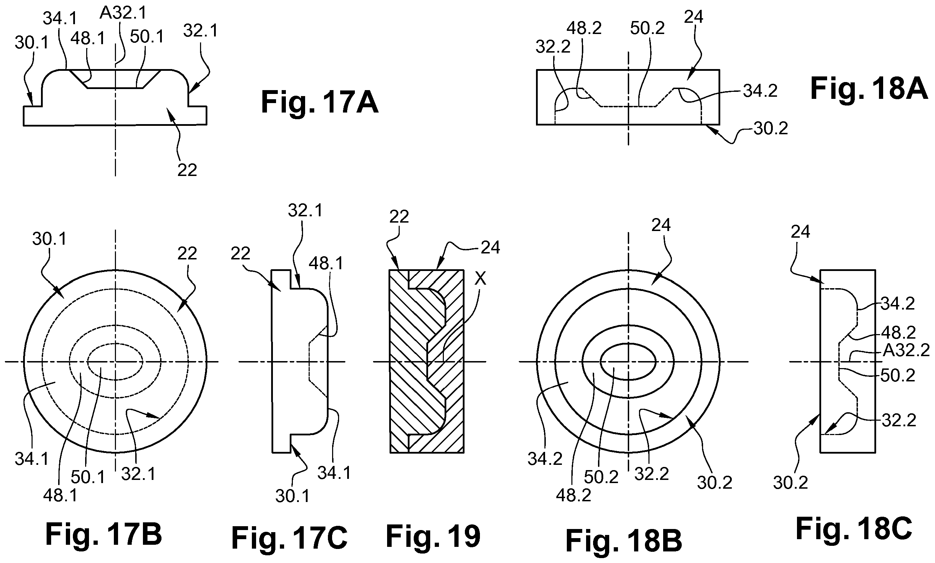

Les figures 17A à 17C, 18A à 18C et 19 illustrent un quatrième mode de réalisation. Les première et deuxième parties 22 et 24 comprennent respectivement des première et deuxième surfaces de contact 30.1 et 30.2.

La première partie 22 comprend une première portion cylindrique de révolution 32.1, en saillie par rapport à la première surface de contact 30.1, qui présente un axe A32.1 perpendiculaire à la première surface de contact 30.1. Selon une configuration, la première portion cylindrique de révolution 32.1 comprend une extrémité libre 34.1, la plus écartée de la première surface de contact 30.1, plane, parallèle à la première surface de contact 30.1.

La deuxième partie 24 comprend une deuxième portion cylindrique de révolution 32.2, en creux par rapport à la deuxième surface de contact 30.2, qui présente un axe A32.2 perpendiculaire à la deuxième surface de contact 30.2. Les première et deuxième portions cylindriques de révolution 32.1 et 32.2 ont le même diamètre. Selon une configuration, la deuxième portion cylindrique de révolution 32.2 comprend un fond 34.2, plat, parallèle à la deuxième surface de contact 30.2.

La première portion cylindrique de révolution 32.1 est dite mâle et la deuxième portion cylindrique de révolution de révolution 32.2 est dite femelle car la première portion cylindrique de révolution 32.1 est disposée dans la deuxième portion cylindrique de révolution 32.2 en position accostée.

Les première et deuxième portions cylindriques de révolution 32.1 et 32.2 ont chacune une hauteur (dimension prise selon une direction perpendiculaire aux première et deuxième surfaces de contact 30.1, 30.2) telle que l'extrémité libre 34.1 de la première portion cylindrique de révolution 32.1 est en contact, ou quasi-contact, avec le fond 34.2 de la deuxième portion cylindrique de révolution 32.2.

Selon le quatrième mode de réalisation, la première partie 22 comprend une première portion tronconique de section ovale 48.1, en creux par rapport à l'extrémité libre 34.1 de la première portion cylindrique de révolution 32.1, qui s'étend depuis l'extrémité libre 34.1 jusqu'à un fond 50.1 plat, parallèle à la première surface de contact 30.1. La première portion tronconique de section ovale 48.1 comprend une grande section inférieure au diamètre de la première portion cylindrique de révolution 32.1 et présente une section qui diminue en direction de la première surface de contact 30.1.

En complément, la deuxième partie 24 comprend une deuxième portion tronconique de section ovale 48.2, en saillie par rapport au fond 34.2 de la deuxième portion cylindrique de révolution 32.2, qui s'étend depuis le fond 34.2 jusqu'à une extrémité libre 50.2 plate, parallèle à la deuxième surface de contact 30.2. La deuxième portion tronconique de section ovale 48.2 comprend une grande section, inférieure au diamètre de la deuxième portion cylindrique de révolution 32.2, et présente une section qui diminue en direction de la deuxième surface de contact 30.2.

Les première et deuxième portions tronconiques de section ovale 48.1, 48.2 ont des formes complémentaires. Ainsi, lorsque les première et deuxième parties 22, 24 sont en position accostée, les première et deuxième parties tronconiques de section ovale 48.1 et 48.2 sont en contact ou quasi-contact.

La deuxième portion tronconique de section ovale 48.2 est dite mâle et la première portion tronconique de section ovale 48.1 est dite femelle car la deuxième portion tronconique de section ovale 48.2 est disposée dans la première portion tronconique de section ovale 48.1 en position accostée.

Selon une première variante, les sections ovales présentent deux axes de symétrie correspondant aux axes Y et Z. Dans ce cas, en position accostée, les première et deuxième parties 22 et 24 peuvent seulement occuper deux positions, différentes et diamétralement opposées.

Selon une deuxième variante, les sections ovales sont dissymétriques par rapport aux axes Y et Z. Dans ce cas, en position accostée, les première et deuxième parties 22 et 24 peuvent occuper une seule position.

Quel que soit le mode de réalisation, les première et deuxième portions tronconiques de section ovale 36.1, 46.1, 48.1; 36.2, 46.2, 48.1 sont positionnées par rapport aux première et deuxième portions cylindriques de révolution 32.1, 32.2 de sorte que la première portion cylindrique de révolution 32.1 pénètre dans la deuxième portion cylindrique de révolution 32.2 avant que les première et deuxième portions tronconiques de section ovale 36.1, 46.1, 48.1 ; 36.2, 46.2, 48.1 ne soient en contact l'une avec l'autre. Cette configuration permet d'obtenir :
- dans un premier temps, un centrage des première et deuxième parties 22, 24, lorsque la première portion cylindrique de révolution 32.1 de la première partie 22 pénètre dans la deuxième portion cylindrique de révolution 32.2 de la deuxième partie 24,
- dans un second temps, une immobilisation en rotation des première et deuxième parties 22 et 24, selon la position accostée, lorsque les première et deuxième portions tronconiques de section ovale 36.1, 46.1, 48.1 ; 36.2, 46.2, 48.1 des première et deuxième parties 22 et 24 coopèrent et sont en contact sur toutes leurs surfaces.

Cette configuration permet, de manière simple, en rapprochant les première et deuxième parties l'une vers l'autre, d'obtenir automatiquement le positionnement des première et deuxième parties selon une position accostée donnée.

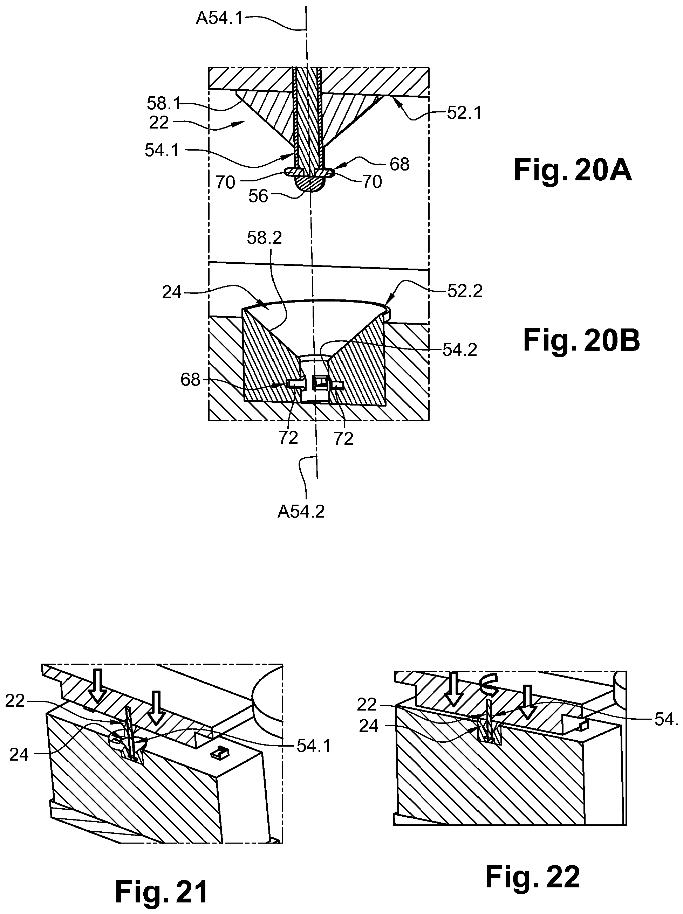

Les figures 20A, 20B, 21 à 23, 24A, 24B et 25 illustrent un cinquième mode de réalisation.

Les première et deuxième parties 22 et 24 comprennent respectivement des première et deuxième surfaces de contact 52.1 et 52.2.

Comme illustré sur la figure 20A, la première partie 22 comprend une première portion cylindrique de révolution sous forme d'une tige 54.1, en saillie par rapport à la première surface de contact, qui présente un axe A54.1 perpendiculaire à la première surface de contact 52.1.

La tige 52.1 comprend une extrémité libre 56, la plus écartée de la première surface de contact 52.1, en forme de demi-sphère.

Comme illustré sur la figure 20B, la deuxième partie 24 comprend une portion cylindrique de révolution 54.2, en creux par rapport à la deuxième surface de contact 52.2, qui présente un axe A54.2 perpendiculaire à la deuxième surface de contact 52.2. La tige 54.1 et la portion cylindrique de révolution 54.2 ont le même diamètre.

La première partie 22 comprend une première portion tronconique de section ovale 58.1 mâle, en saillie par rapport à la première surface de contact 52.1, intercalée entre la tige 54.1 et la première surface de contact 52.1, la première portion tronconique de section ovale 58.1 présentant une section qui s'évase en direction de la première surface de contact 52.1.

En complément, la deuxième partie 24 comprend une deuxième portion tronconique de section ovale 58.2 femelle, en creux par rapport à la deuxième surface de contact 52.2, intercalée entre la portion cylindrique de révolution 54.2 et la deuxième surface de contact 52.2, la deuxième portion tronconique de section ovale 58.2 présentant une section qui s'évase en direction de la deuxième surface de contact 52.2.

Les première et deuxième portions tronconiques de section ovale 58.1, 58.2 ont des formes complémentaires. Ainsi, en position accostée, les première et deuxième parties 22 et 24 sont immobilisées en rotation autour de l'axe d'introduction X.

Selon ce cinquième mode de réalisation, la tige 54.1 est télescopique et configurée pour occuper un état rétracté visible sur les figures 20A, 22, 23 et 25, et un état sorti visible sur la figure 21. Ainsi, la tige 54.1 présente une hauteur qui varie entre l'état sorti et l'état rétracté, la hauteur de la tige 54.1 étant plus importante à l'état sorti qu'à l'état rétracté.

La première partie 22 comprend un premier mécanisme 60 configuré pour modifier la hauteur de la tige 54.1 entre l'état rétracté et l'état sorti.

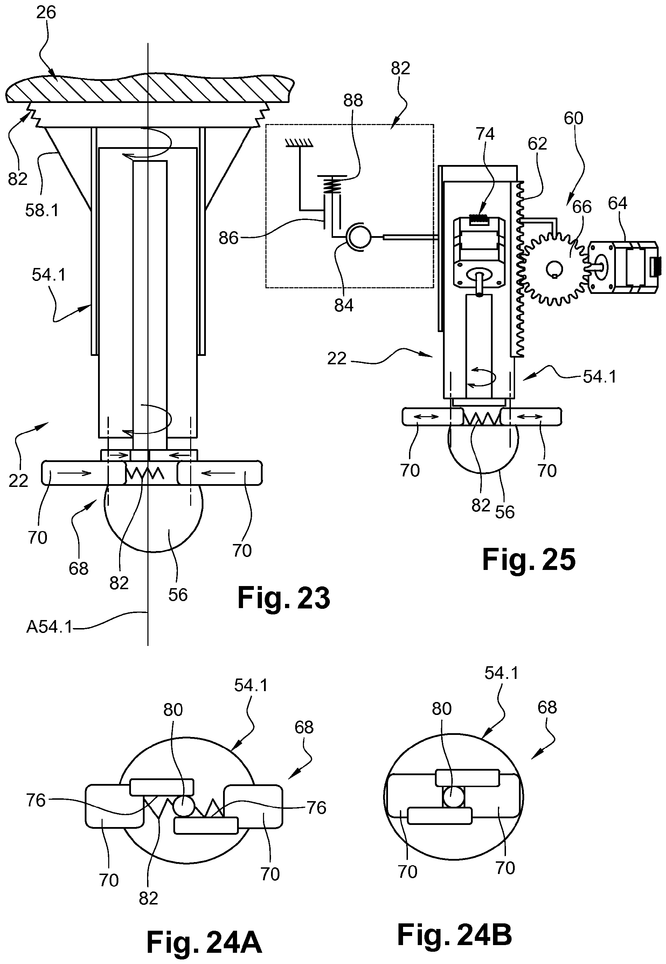

Selon une configuration visible sur la figure 25, le premier mécanisme 60 comprend une crémaillère 62 solidaire de la tige 54.1, un moteur 64, un pignon 66 configuré pour être entraîné en rotation par le moteur 64 et pour engrener sur la crémaillère 62. Selon cette configuration, lorsque le moteur 64 tourne dans un premier sens de rotation, la tige 54.1 se translate de l'état rétracté vers l'état sorti et lorsque le moteur 64 tourne dans un second sens de rotation (contraire au premier), la tige 54.1 se translate de l'état sorti vers l'état rétracté.

Selon ce cinquième mode de réalisation, le dispositif de positionnement 20 comprend un système de verrouillage 68 configuré pour occuper un état verrouillé dans lequel il immobilise en translation et en rotation la tige 54.1 par rapport à la portion cylindrique de révolution 54.2 femelle et un état déverrouillé dans lequel il permet à la tige 54.1 de se translater par rapport à la portion cylindrique de révolution 54.2 femelle.

Selon une configuration, le système de verrouillage 68 comprend :
- au moins un tenon 70 supporté par la tige 54.1 mobile entre une position sortie, visible sur la figure 24A, dans laquelle il s'étend en saillie par rapport à la tige 54.1 selon une direction radiale (perpendiculaire à l'axe A54.1 de la tige) et une position rentrée, visible sur la figure 24B, dans laquelle le tenon 70 n'est plus en saillie par rapport à la tige 54.1,
- au moins une empreinte 72, prévue au niveau de la portion cylindrique de révolution 54.2, configurée pour recevoir le tenon 70 dans la position sortie.

L'empreinte 72 et le tenon 70 ont des formes complémentaires pour que la tige 54.1 soit immobilisée en translation et en rotation par rapport à la portion cylindrique de révolution 54.2 femelle. En variante, l'empreinte 72 est une rainure qui s'étend sur toute la périphérie de la deuxième portion cylindrique de révolution 54.2 femelle pour que la tige 54.1 soit immobilisée en translation par rapport à la portion cylindrique de révolution 54.2 femelle. Selon une configuration visible sur les figures 23, 24A, 24B et 25, la tige 54.1 comprend deux tenons 70 diamétralement opposés et la portion cylindrique de révolution 54.2 femelle comprend deux empreintes 72 diamétralement opposées.

La première partie 22 comprend un deuxième mécanisme 74 configuré pour modifier la position du (ou des) tenon(s) 70 et le (ou les) déplacer de la position sortie vers la position rentrée ou vice versa.

Selon un mode de réalisation visible sur la figure 25, le deuxième mécanisme 74 comprend une crémaillère 76 pour chaque tenon 70, un moteur 78, un pignon 80 configuré pour être entraîné en rotation par le moteur 78 et pour engrener sur la ou (les) crémaillère(s) 76 du (ou des) tenon(s) 70. Ainsi, lorsque le moteur 78 tourne dans un premier sens de rotation, le (ou les) tenon(s) 70 se déplace(nt) de la position rentrée vers la position sortie et lorsque le moteur 78 tourne dans un second sens de rotation (contraire au premier), le (ou les) tenon(s) 70 se déplace(nt) de la position sortie vers la position rentrée.

Le deuxième mécanisme 74 comprend un ressort 82 configuré pour pousser le (ou les) tenon(s) 70 vers la position sortie et le (ou les) maintenir dans cette position.

En fonctionnement, la tige 54.1 étant à l'état sorti, la première partie 22 est rapprochée de la deuxième partie 24. Dès que l'extrémité libre 56 de la tige 54.1 pénètre dans la deuxième portion tronconique 58.2 de la deuxième partie 24, le rapprochement de la première partie 22 et de la deuxième partie 24 va nécessairement conduire à l'introduction de la tige 54.1 dans la deuxième portion cylindrique de révolution 54.2 femelle. Dès que les tenons 70 sont disposés au droit de la ou des empreintes 72, ils se déplacent automatiquement en position sortie grâce à l'action du ressort 82. Ainsi, le système de verrouillage 68 est à l'état verrouillé. Le passage de la tige 54.1 de l'état sorti à l'état rétracté va provoquer le rapprochement des première et deuxième parties 22 et 24. Comme précédemment, grâce aux première et deuxième portions tronconiques de section ovale 58.1, 58.2, la première partie 22 va pivoter par rapport à la deuxième partie 24 jusqu'à ce qu'elle soit positionnée selon la position angulaire souhaitée par rapport à la deuxième partie en position accostée.

Selon une variante visible sur la figure 20A, la première partie 22 est reliée au premier élément 26 par une liaison rigide.

Selon une autre variante visible sur les figures 23 et 25, la première partie 22 est reliée au premier élément 26 par une liaison souple 82 présentant une liaison rotule 84 autorisant des mouvements selon trois axes rotations, une liaison glissière 86 autorisant une translation parallèle à l'axe d'introduction X et un système d'amortissement 88 selon l'axe d'introduction X.

De la même manière, la deuxième partie 24 peut être reliée au deuxième élément 28 par une liaison rigide ou souple.

## Revendications

1. Dispositif de positionnement (20) de deux éléments (26, 28) selon une position accostée, comprenant des première et deuxième parties (22, 24), la première partie comportant :
- une première surface de contact (30.1),
- une première portion cylindrique de révolution (32.1, 54.1), en saillie par rapport à la première surface de contact (30.1) qui présente un axe de révolution (A32.1, A54.1) perpendiculaire à la première surface de contact (30.1),
la deuxième partie (24) comportant :
- une deuxième surface de contact (30.2),
- une deuxième portion cylindrique de révolution (32.2, 54.2), en creux par rapport à la deuxième surface de contact (30.2), qui présente un axe de révolution (A32.2, A54.2) perpendiculaire à la deuxième surface de contact (30.1),
les première et deuxième portions cylindriques de révolution (32.1 54.1; 32.2, 54.2) ayant le même diamètre et les première et deuxième surfaces de contact (30.1, 30.2) étant configurées pour être plaquées l'une contre l'autre en position accostée,
**caractérisé en ce que** les première et deuxième parties (22, 24) comprennent respectivement des première et deuxième portions tronconiques de section ovale (38.1, 46.1, 48.1, 58.1; 38.2, 46.2, 48.1, 58.2) qui ont des formes complémentaires de sorte à immobiliser les première et deuxième parties (22, 24) en rotation selon les axes de révolution (A32.1, A32.2) des première et deuxième portions cylindriques de révolution (32.1 54.1; 32.2, 54.2) en position accostée, les première et deuxième portions tronconiques de section ovale (38.1, 46.1, 48.1, 58.1; 38.2, 46.2, 48.1, 58.2) étant positionnées par rapport aux première et deuxième portions cylindriques de révolution (32.1 54.1; 32.2, 54.2) de sorte que la première portion cylindrique de révolution (32.1, 54.1) pénètre dans la deuxième portion cylindrique de révolution (32.2, 54.2) avant que les première et deuxième portions tronconiques de section ovale (38.1, 46.1, 48.1, 58.1; 38.2, 46.2, 48.1, 58.2) ne soient en contact l'une avec l'autre.

2. Dispositif de positionnement (20) selon la revendication 1, **caractérisé en ce que** la deuxième partie (24) comprend une deuxième portion tronconique (36.2, 46.2, 58.2), en creux par rapport à la deuxième surface de contact (30.2), intercalée entre la deuxième portion cylindrique de révolution (32.2) et la deuxième surface de contact (30.2), la deuxième portion tronconique (36.2, 46.2, 58.2) présentant une section qui s'évase en direction de la deuxième surface de contact (30.2).

3. Dispositif de positionnement (20) selon la revendication 1 ou 2, **caractérisé en ce que** la première portion cylindrique de révolution (32.1) de la première partie (22) comprend une extrémité libre (34.1) arrondie.

4. Dispositif de positionnement (20) selon l'une des revendications précédentes, **caractérisé en ce que** la première partie (22) comprend une première portion cylindrique de révolution sous forme d'une tige (54.1) télescopique et un premier mécanisme (60) configuré pour modifier la hauteur de la tige (54.1), la deuxième partie (24) comportant une portion cylindrique de révolution (54.2) femelle configurée pour recevoir la tige (54.1).

5. Dispositif de positionnement (20) selon la revendication précédente, **caractérisé en ce que** le dispositif de positionnement (20) comprend un système de verrouillage (68) configuré pour occuper un état verrouillé dans lequel il immobilise en translation la tige (54.1) par rapport à la portion cylindrique de révolution (54.2) femelle et un état déverrouillé dans lequel il permet à la tige (54.1) de se translater par rapport à la portion cylindrique de révolution (54.2) femelle.

6. Dispositif de positionnement (20) selon la revendication précédente, **caractérisé en ce que** le système de verrouillage (68) comprend :
- au moins un tenon (70), supporté par la tige (54.1), mobile entre une position sortie dans laquelle il s'étend en saillie par rapport à la tige (54.1) selon une direction radiale et une position rentrée dans laquelle le tenon (70) est positionné dans la tige (54.1),
- au moins une empreinte (72), prévue au niveau de la portion cylindrique de révolution (54.2) femelle, configurée pour recevoir le tenon (70) dans la position sortie.

7. Dispositif de positionnement (20) selon la revendication précédente, **caractérisé en ce que** la première partie (22) comprend un deuxième mécanisme (74) configuré pour modifier la position du (ou des) tenon(s) (70) et le (ou les) déplacer de la position sortie vers la position rentrée.

8. Dispositif de positionnement (20) selon la revendication précédente, **caractérisé en ce que** le deuxième mécanisme (74) comprend un ressort (82) configuré pour pousser le (ou les) tenon(s) (70) vers la position sortie et le (ou les) maintenir dans cette position.

9. Dispositif de positionnement (20) selon l'une des revendications précédentes, **caractérisé en ce que** la première partie (22) et/ou la deuxième partie (24) sont reliées au premier élément (26) et/ou au deuxième élément (28) par une liaison souple (82).

10. Dispositif de positionnement (20) selon l'une des revendications précédentes, **caractérisé en ce que** la première portion tronconique de section ovale (46.1) de la première partie (22) est positionnée entre la première portion cylindrique de révolution (32.1) et la première surface de contact (30.1), la première portion tronconique de section ovale (46.1) présentant une section qui s'évase en direction de la première surface de contact (30.1) et **en ce que** la deuxième portion tronconique de section ovale (46.2) de la deuxième partie (24) est positionnée entre la deuxième portion cylindrique de révolution (32.2) et la deuxième surface de contact (30.2), la deuxième portion tronconique de section ovale (46.2) présentant une section qui s'évase en direction de la deuxième surface de contact (30.2).

11. Dispositif de positionnement (20) selon l'une des revendications 1 à 9, **caractérisé en ce que** la première partie (22) comprend :
- une première portion tronconique de révolution (36.1), intercalée entre la première portion cylindrique de révolution (32.1) et la première surface de contact (30.1),
- la première portion tronconique de révolution (36.1) et la première portion tronconique de section ovale (38.1) formant une rigole périphérique (40.1) qui présente un fond plat correspondant à la première surface de contact (30.1),
et **en ce que** la deuxième partie (24) comprend :
- une deuxième portion tronconique de révolution (36.2), intercalée entre la deuxième portion cylindrique de révolution (32.2) et la deuxième surface de contact (30.2),
- la deuxième portion tronconique de révolution (36.2) et la deuxième portion tronconique de section ovale (38.2) formant une nervure périphérique (40.2) qui présente un sommet plat correspondant à la deuxième surface de contact (30.1).

12. Dispositif de positionnement (20) selon la revendication précédente, **caractérisé en ce que** la première partie (22) comprend une première portion cylindrique de section ovale (42.1) disposée dans le prolongement de la première portion tronconique de section ovale (38.1) et **en ce que** la deuxième partie (24) comprend une deuxième portion cylindrique de section ovale (42.2) disposée dans le prolongement de la deuxième portion tronconique de section ovale (38.2).

13. Dispositif de positionnement (20) selon l'une des revendications 1 à 3, **caractérisé en ce que** la première portion tronconique de section ovale (48.1) est en creux par rapport à une extrémité libre (34.1) de la première portion cylindrique de révolution (32.1) et **en ce que** la deuxième portion tronconique de section ovale (48.2) est en saillie par rapport à un fond (34.2) de la deuxième portion cylindrique (32.2).

14. Véhicule comprenant un habitacle (12), un engin volant (14) et un dispositif de positionnement selon l'une des revendications précédentes pour positionner selon une position accostée l'habitacle (12) et l'engin volant (14).

## Patentansprüche

1. Positionierungsvorrichtung (20) von zwei Elementen (26, 28) in einer angedockten Position, die einen ersten und zweiten Teil (22, 24) aufweist, wobei der erste Teil umfasst:
- Eine erste Kontaktfläche (30.1),
- Einen ersten zylindrischen Drehkörperabschnitt (32.1, 54.1), der im Bezug zu der ersten Kontaktfläche (30.1) hervorsteht und eine Drehsachse (A32.1, A54.1) aufweist, die senkrecht zur ersten Kontaktfläche (30.1) ist,
wobei der zweite Teil (24) umfasst:
- Eine zweite Kontaktfläche (30.2),
- Einen zweiten zylindrischen Drehkörperabschnitt (32.2, 54.2), der in Bezug auf die zweite Kontaktfläche (30.2) vertieft ist und eine Drehachse (A32.2, A54.2) aufweist, die senkrecht zur zweiten Kontaktfläche (30.1) ist,
wobei der erste und zweite zylindrische Drehkörperabschnitt (32.1, 54.1; 32.2, 54.2) den gleichen Durchmesser haben und die erste und zweite Kontaktfläche (30.1, 30.2) so gestaltet sind, dass sie in angedockter Position gegeneinandergedrückt werden,
**dadurch gekennzeichnet, dass** der erste und zweite Teil (22, 24) jeweils einen ersten und zweiten kegelstumpfförmigen Abschnitt mit ovalem Querschnitt (38.1, 46.1, 48.1, 58.1; 38.2, 46.2, 48.1, 58.2) umfassen, die komplementär geformt sind, um den ersten und zweiten Teil (22, 24) in Drehung um die Drehachsen (A32.1, A32.2) des ersten und zweiten zylindrischen Drehkörperabschnitt (32.1 54.1; 32.2, 54.2) in angedockter Position zu blockieren, wobei der erste und zweite kegelstumpfförmige Abschnitt mit ovalem Querschnitt (38.1, 46.1, 48.1, 58.1; 38.2, 46.2, 48.1, 58.2) in Bezug auf den ersten und zweiten zylindrischen Drehkörperabschnitt (32.1 54.1; 32.2, 54.2) so positioniert sind, dass der erste zylindrische Drehkörperabschnitt (32.1, 54.1) in den zweiten zylindrischen Drehkörperabschnitt (32.2, 54.2) eindringt, bevor der erste und zweite kegelstumpfförmige Abschnitt mit ovalem Querschnitt (38.1, 46.1, 48.1, 58.1; 38.2, 46.2, 48.1, 58.2) einander berühren.

2. Positionierungsvorrichtung (20) nach Anspruch 1, **dadurch gekennzeichnet, dass** der zweite Teil (24) einen zweiten kegelstumpfförmigen Abschnitt (36.2, 46.2, 58.2) umfasst, der in Bezug zur zweiten Kontaktfläche (30.2) vertieft ist, und zwischen dem zweiten zylindrischen Drehkörperabschnitt (32.2) und der zweiten Kontaktfläche (30.2) angeordnet ist, wobei der zweite kegelstumpfförmige Abschnitt (36.2, 46.2, 58.2) einen Querschnitt aufweist, der sich in Richtung der zweiten Kontaktfläche (30.2) erweitert.

3. Positionierungsvorrichtung (20) nach Anspruch 1 oder 2, **dadurch gekennzeichnet, dass** der erste zylindrische Drehkörperabschnitt (32.1) des ersten Teils (22) ein abgerundetes freies Ende (34.1) aufweist.

4. Positionierungsvorrichtung (20) nach einem der vorhergehenden Ansprüche, **dadurch gekennzeichnet, dass** der erste Teil (22) einen ersten zylindrischen Drehkörperabschnitt in Form einer teleskopischen Stange (54.1) und einen ersten Mechanismus (60), der zum Verändern der Höhe der Stange (54.1) gestaltet ist, aufweist, wobei der zweite Teil (24) einen vertieften zylindrischen Drehkörperabschnitt (54.2) umfasst, der zum Aufnehmen der Stange (54.1) gestaltet ist.

5. Positionierungsvorrichtung (20) nach dem vorhergehenden Anspruch, **dadurch gekennzeichnet, dass** die Positioniervorrichtung (20) ein Verriegelungssystem (68) umfasst, das zum Einnehmen eines verriegelten Zustands, in dem es die Stange (54.1) in Translation in Bezug auf den vertieften zylindrischen Drehkörperabschnitt (54.2) blockiert, und eines entriegelten Zustands, in dem es der Stange (54.1) erlaubt, sich in Bezug auf den vertieften zylindrischen Drehkörperabschnitt (54.2) zu verschieben, gestaltet ist.

6. Positionierungsvorrichtung (20) nach dem vorhergehenden Anspruch, **dadurch gekennzeichnet, dass** das Verriegelungssystem (68) umfasst:
- Mindestens einen Zapfen (70), der von der Stange (54.1) getragen wird und mobil zwischen einer ausgefahrenen Position, in der er sich in Bezug auf die Stange (54.1) in einer radialen Richtung vorstehend erstreckt, und einer eingefahrenen Position, in der der Zapfen (70) in der Stange (54.1) positioniert ist,
- Mindestens eine Prägung (72), die an dem vertieften zylinderförmigen Drehkörperabschnitt (54.2) vorgesehen und so gestaltet ist, dass sie den Zapfen (70) in ausgefahrener Position aufnimmt.

7. Positionierungsvorrichtung (20) nach dem vorhergehenden Anspruch, **dadurch gekennzeichnet, dass** der erste Teil (22) einen zweiten Mechanismus (74) umfasst, der so gestaltet ist, dass er die Position des (oder der) Zapfen (s) (70) verändert und ihn (oder sie) aus der ausgefahrenen Position in die eingefahrene Position bewegt.

8. Positionierungsvorrichtung (20) nach dem vorhergehenden Anspruch, **dadurch gekennzeichnet, dass** der zweite Mechanismus (74) eine Feder (82) umfasst, die so gestaltet ist, dass sie den (oder die) Zapfen (70) in die ausgefahrene Position drückt und ihn (oder sie) in dieser Position hält.

9. Positionierungsvorrichtung (20) nach einem der vorhergehenden Ansprüche, **dadurch gekennzeichnet, dass** der erste Teil (22) und/oder der zweite Teil (24) mit dem ersten Element (26) und/oder dem zweiten Element (28) durch eine flexible Verbindung (82) verbunden sind.

10. Positionierungsvorrichtung (20) nach einem der vorhergehenden Ansprüche, **dadurch gekennzeichnet, dass** der erste kegelstumpfförmige Abschnitt mit ovalem Querschnitt (46.1) des ersten Teils (22) zwischen dem ersten zylindrischen Drehkörperabschnitt (32.1) und der ersten Kontaktfläche (30.1) positioniert ist, wobei der erste kegelstumpfförmige Abschnitt mit ovalem Querschnitt (46.1) einen Querschnitt aufweist, der sich in Richtung der ersten Kontaktfläche (30.1) erweitert, und dass der zweite kegelstumpfförmige Abschnitt mit ovalem Querschnitt (46.2) des zweiten Teils (24) zwischen dem zweiten zylindrischen Drehkörperabschnitt (32.2) und der zweiten Kontaktfläche (30.2) positioniert ist, wobei der zweite kegelstumpfförmige Abschnitt mit ovalem Querschnitt (46.2) einen Querschnitt aufweist, der sich in Richtung der zweiten Kontaktfläche (30.2) erweitert.

11. Positionierungsvorrichtung (20) nach einem der Ansprüche 1 bis 9, **dadurch gekennzeichnet, dass** der erste Teil (22) aufweist:
- Einen ersten kegelstumpfförmigen Drehkörperabschnitt (36.1), der zwischen dem ersten zylindrischen Drehkörperabschnitt (32.1) und der ersten Kontaktfläche (30.1) angeordnet ist,
- Den ersten kegelstumpfförmigen Abschnitt (36.1) und den ersten kegelstumpfförmigen Abschnitt mit ovalem Querschnitt (38.1), die eine periphere Rinne (40.1) bilden, die einen flachen Boden aufweist, der der ersten Kontaktfläche (30.1) entspricht,
und dass der zweite Teil (24) aufweist:
- Einen zweiten kegelstumpfförmigen Drehkörperabschnitt (36.2), der zwischen dem zweiten zylindrischen Drehkörperabschnitt (32.2) und der zweiten Kontaktfläche (30.2) angeordnet ist,
- Den zweiten kegelstumpfförmigen Abschnitt (36.2) und den zweiten kegelstumpfförmigen Abschnitt mit ovalem Querschnitt (38.2), die eine periphere Rippe (40.2) bilden, die einen flachen Scheitelpunkt aufweist, der der zweiten Kontaktfläche (30.1) entspricht.

12. Positioniervorrichtung (20) nach dem vorhergehenden Anspruch, **dadurch gekennzeichnet, dass** der erste Teil (22) einen ersten zylindrischen Drehkörperabschnitt mit ovalem Querschnitt (42.1) umfasst, der in der Verlängerung des ersten kegelstumpfförmigen Abschnitts mit ovalem Querschnitt (38.1) angeordnet ist und dass der zweite Teil (24) einen zweiten zylindrischen Drehkörperabschnitt mit ovalem Querschnitt (42.2) umfasst, der in der Verlängerung des zweiten kegelstumpfförmigen Abschnitts mit ovalem Querschnitt (38.2) angeordnet ist.

13. Positionierungsvorrichtung (20) nach einem der Ansprüche 1 bis 3, **dadurch gekennzeichnet, dass** der erste kegelstumpfförmige Abschnitt mit ovalem Querschnitt (48.1) in Bezug auf ein freies Ende (34.1) des ersten zylindrischen Drehkörperabschnitts (32.1) vertieft ist und dass der zweite kegelstumpfförmige Abschnitt mit ovalem Querschnitt (48.2) in Bezug auf einem Boden (34.2) des zweiten zylindrischen Abschnitts (32.2) vorsteht.

14. Fahrzeug umfassend einen Fahrgastraum (12), einen Flugkörper (14) und eine Positionierungsvorrichtung (14) nach einem der vorhergehenden Ansprüche zum Positionieren des Fahrgastraums (12) und des Flugkörpers (14) in einer angedockten Position.

## Claims

1. A device (20) for positioning two elements (26, 28) in a docked position, comprising first and second parts (22, 24), the first part including:
- a first contact surface (30.1),
- a first portion in the form of a cylinder of revolution (32.1, 54.1), projecting from the first contact surface (30.1) which has an axis of revolution (A32.1, A54.1) perpendicular to the first contact surface (30.1),
the second part (24) including:
- a second contact surface (30.2),
- a second portion in the form of a cylinder of revolution (32.2, 54.2), recessed relative to the second contact surface (30.2), which has an axis of revolution (A32.2, A54.2) perpendicular to the second contact surface (30.1), the first and second portions in the form of a cylinder of revolution (32.1, 54.1; 32.2, 54.2) having the same diameter and the first and second contact surfaces (30.1, 30.2) being configured to be pressed against each other in the docked position,
**characterised in that** the first and second parts (22, 24) respectively comprise first and second frustoconical portions of oval section (38.1, 46.1, 48.1, 58.1; 38.2, 46.2, 48.1, 58.2) that have complementary shapes so as to prevent the first and second parts (22, 24) from rotating about the axes of revolution (A32.1, A32.2) of the first and second portions in the form of a cylinder of revolution (32.1 54.1; 32.2, 54.2) in the docked position, the first and second frustoconical portions of oval section (38.1, 46.1, 48.1, 58.1; 38.2, 46.2, 48.1, 58.2) being positioned relative to the first and second portions in the form of a cylinder of revolution (32.1 54.1; 32.2, 54.2) so that the first portion in the form of a cylinder of revolution (32.1, 54.1) penetrates into the second portion in the form of a cylinder of revolution (32.2, 54.2) before the first and second frustoconical portions of oval section (38.1, 46.1, 48.1, 58.1; 38.2, 46.2, 48.1, 58.2) are in contact with each other.

2. The positioning device (20) according to claim 1, **characterised in that** the second part (24) comprises a second frustoconical portion (36.2, 46.2, 58.2), recessed relative to the second contact surface (30.2), interposed between the second portion in the form of a cylinder of revolution (32.2) and the second contact surface (30.2), the second frustoconical portion (36.2, 46.2, 58.2) having a section which widens towards the second contact surface (30.2).

3. The positioning device (20) according to claim 1 or 2, **characterised in that** the first portion in the form of a cylinder of revolution (32.1) of the first part (22) comprises a free rounded end (34.1).

4. The positioning device (20) according to one of the preceding claims, **characterised in that** the first part (22) comprises a first portion in the form of a cylinder of revolution in the shape of a telescopic rod (54.1) and a first mechanism (60) configured to modify the height of the rod (54.1), the second part (24) including a female portion in the form of a cylinder of revolution (54.2) configured to receive the rod (54.1).

5. The positioning device (20) according to the preceding claim, **characterised in that** the positioning device (20) comprises a locking system (68) configured to occupy a locked state wherein it prevents the rod (54.1) from translating relative to the female portion in the form of a cylinder of revolution (54.2) and an unlocked state wherein it allows the rod (54.1) to translate relative to the female portion in the form of a cylinder of revolution (54.2).

6. The positioning device (20) according to the preceding claim, **characterised in that** the locking system (68) comprises:
- at least one tenon (70), supported by the rod (54.1), movable between an extended position wherein it projects from the rod (54.1) in a radial direction and a retracted position wherein the tenon (70) is positioned in the rod (54.1),
- at least one indentation (72), provided at the female portion in the form of a cylinder of revolution (54.2), configured to receive the tenon (70) in the extended position.

7. The positioning device (20) according to the preceding claim, **characterised in that** the first part (22) comprises a second mechanism (74) configured to modify the position of the tenon(s) (70) and to displace it (them) from the extended position to the retracted position.

8. The positioning device (20) according to the preceding claim, **characterised in that** the second mechanism (74) comprises a spring (82) configured to push the tenon(s) (70) to the extended position and keep it (them) in this position.

9. The positioning device (20) according to one of the preceding claims, **characterised in that** the first part (22) and/or the second part (24) are connected to the first element (26) and/or to the second element (28) by a flexible connection (82).

10. The positioning device (20) according to one of the preceding claims, **characterised in that** the first frustoconical portion of oval section (46.1) of the first part (22) is positioned between the first portion in the form of a cylinder of revolution (32.1) and the first contact surface (30.1), the first frustoconical portion of oval section (46.1) having a section which widens towards the first contact surface (30.1) and **in that** the second frustoconical portion of oval section (46.2) of the second part (24) is positioned between the second portion in the form of a cylinder of revolution (32.2) and the second contact surface (30.2), the second frustoconical portion of oval section (46.2) having a section which widens towards the second contact surface (30.2).

11. The positioning device (20) according to one of claims 1 to 9, **characterised in that** the first part (22) comprises:
- a first frustoconical portion of revolution (36.1), interposed between the first portion in the form of a cylinder of revolution (32.1) and the first contact surface (30.1),
- the first frustoconical portion of revolution (36.1) and the first frustoconical portion of oval section (38.1) forming a peripheral channel (40.1) which has a flat bottom corresponding to the first contact surface (30.1),
and **in that** the second part (24) comprises:
- a second frustoconical portion of revolution (36.2), interposed between the second portion in the form of a cylinder of revolution (32.2) and the second contact surface (30.2),
- the second frustoconical portion of revolution (36.2) and the second frustoconical portion of oval section (38.2) forming a peripheral rib (40.2) which has a flat top corresponding to the second contact surface (30.1).

12. The positioning device (20) according to the preceding claim, **characterised in that** the first part (22) comprises a first cylindrical portion of oval section (42.1) disposed in the extension of the first frustoconical portion of oval section (38.1) and **in that** the second part (24) comprises a second cylindrical portion of oval section (42.2) disposed in the extension of the second frustoconical portion of oval section (38.2).

13. The positioning device (20) according to one of claims 1 to 3, **characterised in that** the first frustoconical portion of oval section (48.1) is recessed relative to a free end (34.1) of the first portion in the form of a cylinder of revolution (32.1) and **in that** the second frustoconical portion of oval section (48.2) projects from a bottom (34.2) of the second cylindrical portion (32.2).

14. A vehicle comprising a passenger compartment (12), a flying machine (14) and a positioning device according to one of the preceding claims for positioning the passenger compartment (12) and the flying machine (14) in a docked position.
